(19) Europäisches Patentamt
European Patent Office
Office européen des brevets

(11) Veröffentlichungsnummer: **0 536 597 B1**

(12) **EUROPÄISCHE PATENTSCHRIFT**

(45) Veröffentlichungstag der Patentschrift: **28.06.95**

(51) Int. Cl.[6]: **C08F 2/24**, C09D 157/00, C09J 157/00

(21) Anmeldenummer: **92116326.7**

(22) Anmeldetag: **24.09.92**

Die Akte enthält technische Angaben, die nach dem Eingang der Anmeldung eingereicht wurden und die nicht in dieser Patentschrift enthalten sind.

# (54) Wässrige Polymerisatdispersionen.

(30) Priorität: **07.10.91 DE 4133193**

(43) Veröffentlichungstag der Anmeldung: **14.04.93 Patentblatt 93/15**

(45) Bekanntmachung des Hinweises auf die Patenterteilung: **28.06.95 Patentblatt 95/26**

(84) Benannte Vertragsstaaten: **DE ES FR GB IT NL SE**

(56) Entgegenhaltungen:
**EP-A- 0 334 515**
**GB-A- 932 389**

(73) Patentinhaber: **BASF Aktiengesellschaft**
**Carl-Bosch-Strasse 38**
**D-67063 Ludwigshafen (DE)**

(72) Erfinder: **Wendel, Kurt, Dr.**
**Woehlerstrasse 26**
**W-6700 Ludwigshafen (DE)**
Erfinder: **Schwerzel, Thomas, Dr.**
**Auf der Hoehe 42**
**W-6701 Meckenheim (DE)**
Erfinder: **Hirsch, Guenter, Dr.**
**Ostpreussenstrasse 9**
**W-6704 Mutterstadt (DE)**

EP 0 536 597 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wäßrige Polymerisatdispersionen von durch radikalische Polymerisation ungesättigter Monomeren erhältlichen Polymerisaten, die wenigstens ein durch Hydrolyse in wäßriger Phase erhältliches Stärkeabbauprodukt zugesetzt enthalten, das bei Raumtemperatur in Wasser vollständig löslich ist und ein gewichtsmittleres Molekulargewicht $M_w$ von 2500 bis 25000 aufweist. Ferner betrifft die vorliegende Erfindung Verfahren zur Herstellung derartiger wäßriger Polymerisatdispersionen sowie deren Verwendung.

Wäßrige Polymerisatdispersionen sind Systeme, die als disperse Phase in einem wäßrigen Dispersionsmedium dispers verteilte Polymerisatteilchen enthalten. Da die dispergierten Polymerisatteilchen dazu neigen, sich aus Gründen der thermodynamischen Stabilität zusammenzulagern, werden wäßrige Polymerisatdispersionen in der Regel unter Verwendung grenzflächenaktiver Substanzen stabilisiert.

Unter anderem werden als solche grenzflächenaktiven Substanzen Stärken und Stärkederivate empfohlen, die im Vergleich zu anderen grenzflächenaktiven Substanzen insofern von Vorteil sind, als es sich um nachwachsende Rohstoffe handelt. Die Verwendung von nichtabgebauten Stärken oder von keinen Abbau implizierenden Derivaten von nichtabgebauten Stärken ist gegenüber einer Verwendung von abgebauten Stärken oder deren Derivaten insofern von Nachteil, als die erstgenannten sowohl hinsichtlich ihrer Löslichkeit in Wasser als auch hinsichtlich ihres rheologischen Verhaltens in wäßrigem Medium nicht voll zu befriedigen vermögen.

Die DE-A 39 22 784 betrifft ein Verfahren zur Herstellung wäßriger Polymerisatdispersionen durch radikalische Polymerisation ungesättigter Monomeren in Gegenwart von gegebenenfalls chemisch modifizierten Dextrinen, wobei die Polymerisate wenigstens 20 Gew.-% eines Diens enthalten müssen, und der Gewichtsanteil der Dextrine, der ein Molekulargewicht von über 5000 aufweist, wenigstens 50 Gew.-% und der Gewichtsanteil der Dextrine, der ein Molekulargewicht über 100 000 aufweist, höchstens 5 Gew.-% beträgt. Als Dextrine werden dabei abgebaute Stärken verstanden, deren Abbau durch Hitzeeinwirkung mit oder ohne Zusatz von Chemikalien erfolgt, wobei unter den Abbaubedingungen eine Rekombination von Abbaubruchstücken unter Knüpfung von neuen Bindungen, die so in der ursprünglichen Stärke nicht vorhanden waren, möglich ist. Da der Begriff "Dextrin" teilweise auch generell für alle hochmolekularen Bruchstücke von Stärken verwendet wird, soll hier für die Dextrine der DE-A 39 22 784 der in der Fachliteratur übliche (siehe z.B. Günther Tegge, Stärke und Stärkederivate, Behr's Verlag, Hamburg 1984, S. 173) Begriff "Röstdextrine" verwendet werden. Röstdextrine werden durch Erhitzen von feuchttrockener Stärke, meist in Anwesenheit geringer Mengen Säure, hergestellt. Die wichtigste Reaktion beim Rösten ist ein begrenzter hydrolytischer Abbau der Stärke, der, aufgrund der räumlichen Dichte, von Rekombinationen und Verzweigungsreaktionen begleitet wird.

Typische Röstdextrine sind z.B. die im Handel erhältlichen Weiß- und Gelbdextrine; ferner zählen dazu Dextrine, die unter den Warenzeichen Noredux® und Tackidex® vertrieben werden (Günther Tegge, Stärke und Stärkederivate, Behr's Verlag, Hamburg 1984, S. 173-177).

Nachteilig an dem Verfahren der DE-A 39 22 784 ist, daß es einerseits auf bestimmte Monomere beschränkt ist und andererseits die Anwendung von Röstdextrinen vorsieht, zu deren Herstellung es der relativ aufwendigen, insbesondere hinsichtlich der erforderlichen Reaktoren, Röstverfahren bedarf.

Die EP-A 334 515 betrifft wäßrige Dispersionen von Polyacrylaten, die dadurch erhältlich sind, daß man die Monomeren in Gegenwart eines Dextrins radikalisch polymerisiert, von dem wenigstens 70 % ein Molekulargewicht im Bereich 1000 bis 25000 und nicht mehr als 10 % ein Molekulargewicht oberhalb 25000 aufweist. Nachteilig an diesen wäßrigen Dispersionen ist, daß es sich bei den gemäß der Lehre der EP-A 334 515 zu verwendenden Dextrinen ebenfalls um nur relativ aufwendig erhältliche Röstdextrine handelt, die selbst dann keine hinsichtlich ihrer dynamischen Viskosität langzeitstabilen wäßrigen Polymerisatdispersionen ergeben, wenn man die Röstdextrine vorgelatinisiert einsetzt. So verdoppelt sich die dynamische Viskosität im Falle der günstigsten Ausführungsbeispiele nach Fertigstellung innerhalb von 5 Tagen.

Die DE-A 33 23 804 betrifft wäßrige Polymerisatdispersionen, die u.a. durch radikalische wäßrige Emulsionspolymerisation in Gegenwart von durch "saure Hydrolyse abgebauten Stärken, die vielfach auch als Dextrine bezeichnet werden" (wörtl. zitiert) erhältlich sind und sich insbesondere zur Herstellung von Polymerisatpulvern eignen. Die Herstellung der Dextrine durch saure Hydrolyse wird in dieser Offenlegungsschrift nicht näher beschrieben, da sie dem Fachmann bekannt sei. Die Ausführungsbeispiele weisen jedoch aus, daß es sich auch im Falle der DE-A 33 23 804 um Röstdextrine mit den genannten nachteiligen Eigenschaften handelt. So wurden unter anderen Gelb- und Weißdextrine eingesetzt.

Aus der EP-A 276 770 sind wäßrige Polymerisatdispersionen bekannt, die durch Polymerisation bestimmter ungesättigter Monomerer in Gegenwart von abgebauten Stärken erhältlich sind, wobei die Stärken durch ihre intrinsische Viskosität charakterisiert sind. Nachteilig an diesen Polymerisatdispersionen

ist, daß die Identität der beispielhaft verwendeten abgebauten Stärken völlig offen und die Viskosität ein denkbar undefiniertes Maß zu ihrer Charakterisierung ist, wie in der EP-A 334 515 nachgewiesen wurde.

Die GB-A 932 389 betrifft die Verwendung von durch enzymkatalysierte Hydrolyse in wäßrigem Medium mittels Nervanase® 10 X abgebauten Stärkeabbauprodukten zur Stabilisierung wäßriger Polymerisatdispersionen. Nachteilig an diesen Stärkeabbauprodukten ist, daß sie bei Raumtemperatur in Wasser nicht vollständig löslich sind und daß ihr Stabilisierungsvermögen nicht voll zu befriedigen vermag.

Der vorliegenden Erfindung lag daher die Aufgabe zugrunde, wäßrige Polymerisatdispersionen von durch radikalische Polymerisation ungesättigter Monomeren erhältlichen Polymerisaten zur Verfügung zu stellen, deren disperse Verteilung im Vergleich zum Stand der Technik mit Hilfe von einfacher zugänglichen abgebauten Stärken stabilisiert wird und die gleichzeitig in voll befriedigender Weise

a) auf einfache Art und Weise erhältlich sind,
b) eine erhöhte Stabilität bei mechanischer oder thermischer Beanspruchung aufweisen,
c) gegenüber Elektrolytzugabe eine erhöhte Stabilität zeigen,
d) nicht auf Polymerisate spezieller Monomeren beschränkt sind,
e) eine erhöhte Fließfähigkeit zeigen,
f) eine Fließfähigkeit aufweisen, die auch über lange Zeiträume im wesentlichen unverändert bleibt,
g) schaumarm sind,
h) mit einem mittleren Teilchendurchmesser erhalten werden können, der über einen breiten Bereich variabel ist,
i) einen reduzierten Anteil an Mikroflockungen (Stippen) und Makroflockungen (Koagulat) aufweisen,
j) sich bei längerem Lagern nicht verfärben,
k) zur Herstellung redispergierbarer Pulver geeignet sind und
l) auch bei längerem Lagern keiner Phasentrennung unterliegen.

Demgemäß wurden die eingangs definierten wäßrigen Polymerisatdispersionen gefunden. Durch Hydrolyse in wäßriger Phase erhältliche, bei Raumtemperatur in Wasser vollständig lösliche Stärkeabbauprodukte eines gewichtsmittleren Molekulargewichtes von 2500 bis 25000 werden im Unterschied zu den Röstdextrinen üblicherweise als verzuckerte Stärken bezeichnet und sind als solche im Handel erhältlich (z.B. die C* PUR Produkte 01906, 01908, 01910, 01912, 01915, 01921, 01924, 01932 oder 01934 der Cerestar Deutschland GmbH, D-1150 Krefeld 12).

Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.-% sowie vorzugsweise säure- oder enzymkatalysiert vorgenommen wird, die Möglichkeit der Rekombination und Verzweigung im wesentlichen nicht gegeben ist, was sich nicht zuletzt auch in anderen Molekulargewichtsverteilungen äußert. So haben sich verzuckerte Stärken, die eine bimodale Molekulargewichtsverteilung aufweisen, erfindungsgemäß als besonders vorteilhaft erwiesen.

Die Herstellung verzuckerter Stärken ist allgemein bekannt und u.a. in Günther Tegge, Stärke und Stärkederivate, Behr's Verlag, Hamburg 1984, S. 173 und S. 220 ff sowie in der EP-A 441 197 beschrieben. Vorzugsweise handelt es sich bei den erfindungsgemäß zu verwendenden verzuckerten Stärken um solche, deren gewichtsmittleres Molekulargewicht $M_w$ im Bereich von 4000 bis 16000, besonders bevorzugt im Bereich von 6500 bis 13000 liegt.

Die erfindungsgemäß zu verwendenden verzuckerten Stärken sind bei Raumtemperatur in Wasser vollständig löslich, wobei die Löslichkeitsgrenze in der Regel oberhalb von 50 Gew.-% liegt, was sich für die Herstellung der erfindungsgemäßen wäßrigen Polymerisatdispersionen als besonders vorteilhaft erweist.

Es hat sich ferner als günstig erwiesen, wenn die erfindungsgemäß zu verwendenden verzuckerten Stärken eine Unheitlichkeit U (definiert als Verhältnis von gewichtsmittlerem Molekulargewicht $M_w$ zu zahlenmittlerem Molekulargewicht $M_n$; U charakterisiert die Molekulargewichtsverteilung) im Bereich von 6 bis 12 aufweisen. Besonders vorteilhaft beträgt U 7 bis 11 und ganz besonders günstig ist ein U von 8 bis 10.

Ferner ist es von Vorteil, wenn der Gewichtsanteil der erfindungsgemäß zu verwendenden verzuckerten Stärken, der ein Molekulargewicht unterhalb von 1000 aufweist, wenigstens 10 Gew.-%, jedoch nicht mehr als 70 Gew.-% beträgt. Besonders bevorzugt liegt dieser Gewichtsanteil im Bereich von 20 bis 40 Gew.-%.

Darüber hinaus ist es empfehlenswert, solche erfindungsgemäß zu verwendenden verzuckerten Stärken anzuwenden, deren Dextroseequivalent DE 5 bis 40, vorzugsweise 10 bis 30 und besonders bevorzugt 10 bis 20 beträgt. Der DE-Wert charakterisiert das Reduktionsvermögen bezogen auf das Reduktionsvermögen von wasserfreier Dextrose und wird nach DIN 10308 Ausgabe 5.71, des Normenausschusses Lebensmittel und landwirtschaftliche Produkte, bestimmt (vgl. auch Günther Tegge, Stärke und Stärkederivate, Behr's Verlag, Hamburg 1984, S. 305).

Außerdem hat es sich gezeigt, daß in ihrem Eigenschaftsprofil besonders günstige wäßrige Polymerisatdispersionen dann erhalten werden, wenn man erfindungsgemäß zu verwendende verzuckerte Stärken einsetzt, deren 40 gew.-%igen wäßrigen Lösungen bei 25 °C und einem Schergefälle von 75 $s^{-1}$ eine nach DIN 53 019 bestimmte dynamische Viskosität $\eta^{40}$ [Pa•s] von 0,01 bis 0,06, vorzugsweise von 0,015 bis 0,04 und besonders bevorzugt von 0,02 bis 0,035 aufweisen.

An dieser Stelle sei festgehalten, daß in dieser Schrift, sofern nichts anderes erwähnt ist, Aussagen über das Molekulargewicht von erfindungsgemäß zu verwendenden verzuckerten Stärken auf Bestimmungen mittels der Gelpermeationschromatographie beruhen, wobei unter folgenden Bedingungen chromatographiert wurde:

| | |
|---|---|
| Säulen: | 3 Stück 7.5 x 600 mm Stahl gefüllt mit TSK-Gel G 2000 PW; G 3000 PW u. G 4000 PW. Porenw. 5 µm |
| Eluent: | Wasser dest. |
| Temp.: | RT (Raumtemperatur) |
| Detektion: | Differentialrefraktometer (z.B. ERC 7511) |
| Fluss: | 0.8 ml/min. Pumpe: (z.B. ERC 64.00) |
| Injectv.: | 20 µl Ventil: (z.B. VICI 6-Wege-Ventil) |
| Auswertung: | Bruker Chromstar GPC-Software |
| Eichung: | Die Eichung erfolgte im niedermolekularen Bereich mit Glucose, Raffinose, Maltose und Maltopentose. Für den höhermolekularen Bereich wurden Pullulan-Standards mit einer Polydispersität < 1.2 verwendet. |

Als Ausgangsstärken zur Herstellung der erfindungsgemäß zu verwendenden verzuckerten Stärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet.

Ein wesentlicher Vorzug der erfindungsgemäß zu verwendenden verzuckerten Stärken ist, daß es hinsichtlich ihrer Anwendung, abgesehen von der in einfachster Weise durchzuführenden partiellen Hydrolyse der Ausgangsstärke zu ihrer Herstellung, keiner weiteren chemischen Modifizierung bedarf. Selbstverständlich können sie aber auch in z.B. durch Veretherung oder Veresterung chemisch modifizierter Form erfindungsgemäß angewendet werden. Diese chemische Modifizierung kann auch bereits an der Ausgangsstärke vor deren Abbau durchgeführt worden sein. Veresterungen sind sowohl mit anorganischen als auch mit organischen Säuren, deren Anhydriden oder Chloriden möglich. Von besonderem Interesse sind phosphatierte und acetylierte abgebaute Stärken. Die gängigste Methode zur Veretherung ist die Behandlung mit organischen Halogenverbindungen, Epoxiden oder Sulfaten in wäßriger alkalischer Lösung. Besonders geeignete Ether sind Alkylether, Hydroxyalkylether, Carboxyalkylether und Allylether. Ferner kommen auch Umsetzungsprodukte mit 2,3-Epoxipropyltrimethylammoniumchlorid in Betracht. Chemisch nicht modifizierte verzuckerte Stärken sind bevorzugt.

Als radikalisch polymerisierbare Monomere kommen unter anderen insbesondere monoethylenisch ungesättigte Monomere wie Olefine, z.B. Ethylen, vinylaromatische Monomere wie Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisen den $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl und -2-ethlyhexylester, Maleinsäuredimethylester oder Maleinsäure-n-butylester, Nitrile $\alpha,\beta$-monoethylenisch ungesättigter Carbonsäuren wie Acrylnitril sowie $C_{4-8}$ konjugierte Diene wie 1,3-Butadien und Isopren in Betracht. Die genannten Monomeren sind im wesentlichen in wäßrigem Medium nicht löslich und bilden in der Regel die Hauptmonomeren, die, bezogen auf die Gesamtmenge der zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20,vorzugsweise 1 bis 10 Gew.-%, miteinpolymerisiert.

Beispiele für derartige Monomere sind 3 bis 6 C-Atome aufweisende $\alpha,\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert.

Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden $\alpha,\beta$-monoethylenisch ungesättigten Carbonsäuren sowie deren Ether mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohle mit $\alpha,\beta$-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat oder Methylenbisacrylamid. Neben ungesättigte Doppelbindungen aufweisenden Monomeren können in untergeordneten Mengen, üblicherweise 0,01 bis 4 Gew.-% bezogen auf die zu polymerisierenden Monomeren, das Molekulargewicht regelnde Substanzen wie tert.-Dodecylmercaptan miteinpolymerisiert werden. Vorzugsweise werden derartige Substanzen im Gemisch mit den zu polymerisierenden Monomeren der Polymerisationszone zugegeben.

Bevorzugte Klassen von erfindungsgemäßen wäßrigen Polymerisatdispersionen sind solche, deren Polymerisate durch radikalische Polymerisation von Monomerengemischen erhältlich sind, die

- zu 50 bis 100 Gew.-% aus Estern der Acryl- und/oder Methacrylsäure mit 1 bis 12 C-Atome aufweisenden Alkanolen und/oder Styrol (Klasse I)

oder

- zu 70 bis 100 Gew.-% aus Styrol und/oder Butadien (Klasse II)

oder

- zu 70 bis 100 Gew.-% aus Vinylchlorid und/oder Vinylidenchlorid (Klasse III)

zusammengesetzt sind, wobei die Klasse I besonders bevorzugt ist und vorzugsweise nachfolgende Monomerenzusammensetzungen umfaßt:

90 bis 99 Gew.-% aus Estern der Acryl- und/oder Methacrylsäure mit 1 bis 8 C-Atome aufweisenden Alkanolen und/oder Styrol und

1 bis 10 Gew.-% Acrylsäure, Methacrylsäure oder deren Gemisch.

Von ganz besonderem Interesse sind die nachfolgenden Monomerenzusammensetzungen:

90 bis 99 Gew.-% n-Butylacrylat und/oder Styrol

1 bis 10 Gew.-% Acrylsäure und/oder Methacrylsäure.

Die erfindungsgemäß zu verwendenden verzuckerten Stärken können sowohl als einzige Dispergiermittel als auch im Gemisch mit anderen grenzflächenaktiven Substanzen angewendet werden. Werden sie als einzige Dispergiermittel eingesetzt, sind sie in den erfindungsgemäßen wäßrigen Polymerisatdispersionen normalerweise in Mengen von, bezogen auf die Menge an polymerisierten Monomeren, 1 bis 120 Gew.-% enthalten.

Als begleitende grenzflächenaktive Substanzen kommen prinzipiell die ansonsten als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren relative Molekulargewichte im Unterschied zu den Schutzkolloiden üblicherweise unter 2000 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest: $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208. Werden begleitende grenzflächenaktive Substanzen mitverwendet (in der Regel in Mengen von bis zu 5 Gew.-%, bezogen auf die Menge der polymerisierten Monomeren) erweisen sich erfindungsgemäße wäßrige Polymerisatdispersionen auch noch dann als vorteilhaft, wenn der Anteil an erfindungsgemäß zu verwendenden verzuckerten

Stärken, bezogen auf die Menge der polymerisierten Monomeren, 0,01 Gew.-% beträgt. Vorteilhaft ist u.a. insbesondere die voll befriedigende biologische Abbaubarkeit der erfindungsgemäßen Dispergiermittel, was vermutlich nicht zuletzt darauf zurückzuführen ist, daß beim Stärkeabbau zu ihrer Herstellung im wesentlichen keine Repolymerisation unter Knüpfung von Bindungen erfolgt, die von denen in der natürlichen Ausgangsstärke verschieden sind.

Mit Vorzug werden die erfindungsgemäßen wäßrigen Polymerisatdispersionen so hergestellt, daß man die Monomeren nach dem Verfahren der radikalischen wäßrigen Emulsionspolymerisation in Anwesenheit der erfindungsgemäß zu verwendenden verzuckerten Stärken polymerisiert. Die Emulsionspolymerisationstemperatur beträgt in der Regel 30 bis 95, vorzugsweise 75 bis 90 ° C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In anwendungstechnisch vorteilhafter Weise enthält die Vorlage und/oder der Monomerenzulauf geringe Mengen an Emulgatoren, bezogen auf die Gesamtmenge der zu polymerisierenden Monomeren in der Regel weniger als 0,5 Gew.-%, um die Oberflächenspannung des Dispergiermediums zu reduzieren und so das Einrühren zu erleichtern. Häufig werden die Monomeren daher in mit diesen Hilfsemulgatoren voremulgierter Weise der Polymerisationszone zugeführt. Aufgrund der hohen Löslichkeit der erfindungsgemäß zu verwendenden verzuckerten Stärken in Wasser, läßt sich das Zulaufverfahren dadurch besonders einfach gestalten, daß man die Gesamtmenge der zu verwendenden verzuckerten Stärke in einer wäßrigen Vorlage in gelöster Form vorlegt; ein Vorgelatinisieren ist nicht erforderlich. D.h. die bei der partiellen Hydrolyse der Ausgangsstärke anfallende wäßrige Lösung kann, nachdem die Hydrolyse gestoppt wurde, z.B. durch Neutralisation der katalytisch wirkenden Säure und Abkühlen, unmittelbar für die wäßrige Emulsionspolymerisation weiterverwendet werden. Ein vorheriges Isolieren, z.B. durch Sprühtrocknen, der verzuckerten Stärke ist nicht erforderlich.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate oder $H_2O_2$, als auch um Azoverbindungen handeln.

Geeignet sind auch kombinierte Systeme, die aus wenigstens einem organischen Reduktionsmittel und wenistens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetallbisulfit und anstelle von Wasserstoffperoxid tert.-Butylhydroperoxid oder Alkalimetallperoxidisulfate und/oder Ammoniumperoxidisulfate angewendet werden. Bei den kombinierten Systemen ist es ferner zweckmäßig, die verzuckerten Stärken als reduzierende Komponente zu verwenden. In der Regel beträgt die Menge der eingesetzten radikalischen Initiatorsysteme, bezogen auf die Gesamtmenge der zu polymerisierenden Monomeren 0,1 bis 2 Gew.-%. Besonders bevorzugt werden Ammonium- und/oder Alkalimetallperoxidisulfate für sich oder als Bestandteil kombinierter Systeme als Initiatoren eingesetzt. Besonders bevorzugt wird Natriumperoxidisulfat verwendet.

Die Art und Weise, in der das radikalische Initiatorsystem im Verlauf der erfindungsgemäßen radikalischen wäßrigen Emulsionspolymerisation dem Polymerisationsgefäß zugegeben wird, ist eher von untergeordneter Bedeutung. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Selbstverständlich kann die erfindungsgemäße radikalische wäßrige Emulsionspolymerisation auch unter erhöhtem oder reduziertem Druck erfolgen.

Die erfindungsgemäßen wäßrigen Polymerisatdispersionen werden in der Regel mit Gesamtfeststoffgehalten von 15 bis 65 Gew.-% hergestellt, wobei diejenigen anwendungstechnisch besonders bevorzugt sind,

die 10 bis 75, ganz besonders bevorzugt 20 bis 60 Gew.-%, bezogen auf die polymerisierten Monomeren, erfindungsgemäße verzuckerte Stärken zugesetzt enthalten.

Die erfindungsgemäßen wäßrigen Polymerisatdispersionen sind außerordentlich vielseitig verwendbar. Sie eignen sich insbesondere als Klebstoffe, als Bindemittel für Teppichrückenbeschichtungen, als Bindemittel für Papierstreichmassen, als Zusatz in mineralischen, z.B. hydraulisch abbindenden, Bindemitteln, als Schlichtemittel für Fasern, als Bindemittel für feinteilige mineralische und/oder organische Materialien zur Herstellung von Formkörpern (z.B. Spanplatten), insbesondere für den Metallguß, oder Anstrichfarben und Putzen, als Verdicker sowie als Bindemittel für die Herstellung von Schleifmitteln auf der Basis untereinander und/oder auf einem Träger gebundenen feinteiligen Schleifpartikeln. Von besonderem Vorteil ist hierbei das erhöhte Filmbildungsvermögen der erfindungsgemäßen wäßrigen Polymerisatdispersionen sowie die erhöhte Reißfestigkeit (insbesondere bei erhöhter Temperatur) der beim Verfilmen resultierenden Filme. Aufgrund dieser Eigenschaften eignen sich die erfindungsgemäßen wäßrigen Polymerisatdispersionen auch zur Herstellung von Überzügen, insbesondere zur Umhüllung und/oder Einbettung von oral applizierbaren pharmazeutischen Wirkstoffen.

Eine weitere bemerkenswerte Eigenschaft der erfindungsgemäßen wäßrigen Polymerisatdispersionen ist, daß sie in der Regel in an sich bekannter Weise in redispergierbare Polymerisatpulver überführt werden können (z.B. durch Sprühtrocknung oder Walzentrocknung oder Saugfiltertrocknung). Im allgemeinen ist diesbezüglich auch bei weichen Polymerisaten (Glasübergangstemperatur unterhalb 30 ° C) eine Verwendung an sich bekannter Hilfsmittel wie Sprühhilfsmittel (z.B. Polyvinylalkohole oder feinteilige Silicate) nicht erforderlich, insbesondere dann, wenn der Gehalt der erfindungsgemäßen wäßrigen Polymerisatdispersionen an den erfindungsgemäß zu verwendenden verzuckerten Stärken, bezogen auf die Menge der polymerisierten Monomeren, oberhalb von 10 Gew.-% liegt.

Selbstverständlich können die an sich bekannten Trocknungshilfsmittel mitverwendet werden. Die Redispergierbarkeit der Pulver bleibt in der Regel auch bei längerem Lagern erhalten. Von besonderem Interesse ist, daß die Redispergierbarkeit der Pulver in der Regel selbst dann gegeben ist, wenn keine ionische Gruppen aufweisenden Monomeren miteinpolymerisiert worden sind. Nochmals besonders hervorzuheben ist an den erfindungsgemäßen wäßrigen Polymerisatdispersionen ihre auch bei hohen Feststoffgehalten erhöhte Fließfähigkeit sowie die Langzeitstabilität derselben.

In vorteilhafter Weise anwendungstechnisch besonders vielseitig anwendbar sind erfindungsgemäße wäßrige Polymerisatdispersionen, deren Polymerisate durch radikalische Polymerisation von Monomerengemischen erhältlich sind, die nachfolgende Monomerenzusammensetzung, bestehend aus

39 bis 69 Gew.-% wenigstens eines Esters aus 3 bis 6 C-Atome aufweisenden $\alpha,\beta$-monoethylenisch ungesättigten Mono- und Dicarbonsäuren und 1 bis 6 C-Atome aufweisenden Alkanolen (Monomere a),

30 bis 60 Gew.-% Styrol (Monomeres b),

1 bis 10 Gew.-% wenigstens eines Monomeren aus der Gruppe umfassend 3 bis 6 C-Atome aufweisende $\alpha,\beta$-monoethylenisch ungesättigte Carbonsäuren, deren Amide und Nitrile (Monomere c) und

0 bis 10 Gew.-% eines oder mehrerer Monomeren aus der Gruppe umfassend N-Alkylolamide von 3 bis 6 C Atome umfassenden $\alpha,\beta$-monoethylenisch ungesättigte Carbonsäuren mit 1 bis 4 C-Atomen in der Alkylgruppe und bis zu 25 C-Atome enthaltende zwei nicht konjugierte ethylenisch umgesättigte Doppelbindungen aufweisende Monomere (Monomere d),

aufweisen und die, bezogen auf die polymerisierten Monomeren 1 bis 120, vorzugsweise 10 bis 65 und besonders bevorzugt 35 bis 55 Gew.-% wenigstens einer erfindungsgemäß zu verwendenden verzuckerten Stärke zugesetzt enthalten. Ihr Gesamtfeststoffgehalt beträgt vorzugsweise 40 bis 60 Gew.-%.

Selbstverständlich können den erfindungsgemäßen wäßrigen Polymerisatdispersionen für den jeweiligen Anwendungszweck an sich bekannte Hilfsmittel wie z.B. Filmbildehilfsmittel oder Füllstoffe zugesetzt werden. In entsprechender Weise läßt sich die innere Festigkeit der vorgenannten bevorzugten wäßrigen Polymerisatdispersionen dadurch variieren, daß die Monomeren d durch andere in dieser Schrift genannte vernetzend wirkende Monomere ganz oder teilweise ersetzt werden.

Diese, durch radikalische wäßrige Emulsionspolymerisation von aus Monomeren a, b, c und gegebenenfalls d zusammengesetzten Monomerengemischen erhältlichen erfindungsgemäßen wäßrigen Polymerisatdispersionen eignen sich insbesondere als Bindemittel für Gießereisande zur Herstellung von Kernen und Formen für den Metallguß, zur Herstellung von Kokillendämmplatten auf der Basis von feinteiligem Papier und gegebenenfalls feinteiligen mineralischen Materialien sowie zur Herstellung von Schleifmitteln auf der Basis von untereinander und/oder auf einem Träger mittels eines Bindemittels gebundenen feinteiligen Schleifpartikeln. Geeigneter Gießereisand besteht in der Regel aus körnigem Quarzsand, in bestimmten Fällen aber auch aus Chromit-, Zirkon- oder Olivinsand. Daneben finden auch Schamotte-, Magnesit-, Sillimanit- oder Korundmaterialien Verwendung. Der mittlere Korndurchmesser (Größtdurchmesser) beträgt normalerweise 0,05 bis 0,6 mm. Die Überführung der Gießereisande in Gießereiformkörper erfolgt im

allgemeinen so, daß man die Sande mit den erfindungsgemäßen wäßrigen Polymerisatdispersionen unter Einstellung des gewünschten Bindemittelgehalts, in der Regel (trocken gerechnet) 0,1 bis 10, vorzugsweise 0,1 bis 5 Gew.-%, bezogen auf die Menge Gießereisand, mischt, die Mischung (hier Mörtel genannt) in eine Form (Negativ) gibt, durch Ausübung von Druck gegebenenfalls verdichtet, und anschließend härtet. Bemerkenswert ist, daß bei Verwendung der erfindungsgemäßen wäßrigen Polymerisatdispersionen, die üblicherweise für diesen Zweck mit einem Gesamtfeststoffgehalt von 40 bis 60 Gew.-% angewendet werden, der Härtungsprozeß nicht notwendigerweise die Anwendung erhöhter Temperaturen (normalerweise 50 bis 250 °C) erfordert, sondern auch durch sich selbst überlassen bei Raumtemperatur mit befriedigender Geschwindigkeit ein Durchhärten erfolgt. In anwendungstechnisch besonders geschickter Weise kann das Durchhärten auch dadurch erzielt werden, daß man die auszuhärtende Masse der Einwirkung von Mikrowellen aussetzt. Mit besonderem Vorteil werden diesbezüglich erfindungsgemäße wäßrige Polymerisatdispersionen empfohlen, die durch radikalische wäßrige Emulsionspolymerisation von Gemischen aus Monomeren a, b, c und d erhältlich sind, deren Monomerenzusammensetzung so gewählt ist, daß ein nur aus den Monomeren a, b und c aufgebautes Polymerisat eine Glasübergangstemperatur im Bereich von 0 bis 40 °C aufweisen würde.

Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \dots \frac{X^s}{Tg^s}$$

wobei $X^1$, $X^2$, ..., $X^s$ die Massenbrüche der Monomeren 1, 2, ..., s und $Tg^1$, $Tg^2$, ..., $Tg^s$ die Glasübergangstemperaturen der jeweils nur aus einem der Monomeren 1, 2, ..., s aufgebauten Polymeren in Grad Kelvin bedeuten. Die Glasübergangstemperaturen der Monomeren a, b und c sind im wesentlichen bekannt und z.B. in J. Brandrup, E.H. Immergut, Polymer Handbook 1st Ed. J. Wiley, New York 1966 und 2nd Ed. J. Wiley, New York 1975, aufgeführt.

Ein weiterer Vorteil bei Verwendung der erfindungsgemäßen wäßrigen Polymerisatdispersionen ist, daß der durchgehärtete Formkörper eine erhöhte Biegefestigkeit, insbesondere bei erhöhter Temperatur, aufweist. Dies gewährleistet eine erhöhte Formstabilität in Gegenwart der heißen Metallschmelzen. Ferner kann die Negativform nach Entnahme des Formkörpers in einfacher Weise mit Wasser gereinigt und der Formkörper selbst bei Bedarf durch Wasserzusatz in nicht gehärteten Mörtel rückgeführt werden (Redispergierbarkeit), was einer unendlich langen Zeit der Verarbeitbarkeit des Mörtels gleichkommt. Enthalten die Polymerisate Monomere d mit eingebaut, resultieren besonders hohe Biegefestigkeiten. Darüberhinaus lassen sich die Biegefestigkeiten weiter erhöhen, indem man vor Anwendung den erfindungsgemäß anzuwendenden wäßrigen Polymerisatdispersionen in Mengen von bis zu 20 Gew.-%, bezogen auf den abzüglich der verzuckerten Stärke bestimmten Feststoffgehalt der wäßrigen Polymerisatdispersionen, gesättigte Dialdehyde, vorzugsweise solche der allgemeinen Formel I

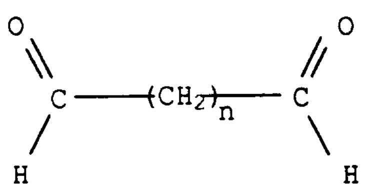

(n = 0 bis 10) (I),

zusetzt, wobei solche Dialdehyde der allgemeinen Formel I mit n = 0 bis 2 bevorzugt sind. Ferner kommen als die Biegefestigkeit erhöhende Zusätze Kondensationsprodukte auf der Basis Formaldehyd, Melamin, Phenol und/oder Harnstoff, z.B. Urecoll® 118, in Betracht. Die zu verwendenden Mengen können sich dabei, bezogen auf den abzüglich der verzuckerten Stärke bestimmten Feststoffgehalt der erfindungsgemäßen wäßrigen Polymerisatdispersionen, auf bis zu 250 Gew.-% belaufen.

Die letztgenannten Zusätze wirken jedoch nur dann in der beschriebenen Weise vorteilhaft, wenn die Härtung bei erhöhter Temperatur, in der Regel 100 bis 250 °C, oder in Anwesenheit von Säure erfolgt. Letzteres ist in einfacher Weise dadurch realisierbar, daß man den pH-Wert des Dispersionsmediums der erfindungsgemäß zu verwendenden wäßrigen Polymerisatdispersionen auf 1 bis 5, vorzugsweise auf 2 bis 3

einstellt. Werden Biegefestigkeiten im üblichen Rahmen verlangt, arbeitet man vorzugsweise ohne Zusätze. Die dabei erhältlichen Formkörper weisen als weitere Eigenschaften auf:

- gute Beständigkeit gegen Erosion durch geschmolzenes Metall
- glatte und geschlossene Oberflächen des Gußkörpers
- gute Entfernbarkeit nach dem Guß
- minimaler Nachreinigungsaufwand für die Gußstücke
- minimale Entwicklung toxischer Gase beim Guß.

Die zur Herstellung von Gießereiformkörpern besonders geeigneten erfindungsgemäßen Polymerisatdispersionen sind in gleicher Weise besonders gut zur Herstellung von Schleifmitteln auf der Basis von untereinander und/oder auf einem Träger mittels eines Bindemittels gebundenen feinteiligen Schleifpartikeln geeignet. Als feinteilige Schleifpartikel kommen insbesondere in Betracht: Schmelz- oder Sinter-Korund, Zirkonkorund, Siliciumcarbid und Schmirgel. Als Trägermaterial eignen sich u.a. flexible Unterlagen wie z.B. Papier, Vulkanfiber, Gewebe, Gewirke, Vliesstoffe auf Basis natürlicher und/oder synthetischer Fasern, Kunststoffolien oder Metallfolien. In der Regel wird zur Herstellung derartiger Schleifmittel auf den Träger zunächst eine sogenannte Grundbinderschicht aufgetragen, in die im nassen Zustand die Schleifpartikel eingetragen werden. Nach einer ersten Fixierung des Schleifkorns durch Trocknen (Härten) wird zwecks besserer Einbettung und Befestigung des Korns in der Regel eine zweite, sogenannte Deckbinderschicht aufgetragen. Prinzipiell können Grund- und Deckbinderschicht aus verschiedenen Bindemitteln bestehen. Erfindungsgemäß besteht wenigstens eine von beiden, bevorzugt die Deckschicht und besonders bevorzugt beide, aus den erfindungsgemäßen wäßrigen Polymerisatdispersionen. Typische Anforderungen, die an zur Herstellung von Schleifmitteln geeignete Bindemittel gestellt werden, sind beispielsweise:

- gute Haftung, sowohl auf der Unterlage als auch am Schleifpartikel
- rasch und schonend härtbar
- möglichst geringe Beanspruchung des Trägermaterials
- hohe Wärmestandfestigkeit
- erhöhte Fließfähigkeit beim Auftrag - gute mechanische Eigenschaften beim Schleifvorgang (harte, zähe Verfilmungen).

Diesen Anforderungen werden die erfindungsgemäßen wäßrigen Polymerisatdispersionen in voll befriedigender Weise gerecht. So erfordert das Härten bei ihrer Verwendung nicht notwendigerweise erhöhte Temperaturen, sondern kann bei Raumtemperatur und besonders vorteilhaft unter Mikrowelleneinwirkung erfolgen. Dies ist insbesondere schonend für das Trägermaterial und vermeidet einen extremen Wasserentzug, wodurch komplizierte Regenerierungen des Trägermaterials in Klimazonen entbehrlich sind.

Ihr günstiges Fließverhalten erweist sich insbesondere dann als vorteilhaft, wenn die erfindungsgemäßen wäßrigen Polymerisatdispersionen als Deckschicht verwendet werden, da es das Eindringen des Bindemittels in die Schleifkorn-Zwischenräume ermöglicht.

Darüberhinaus kennzeichnet die erfindungsgemäßen Binder vor allem eine erhöhte Wärmestandfestigkeit, so daß die Schleifkörner auch unter den beim Schleifvorgang auftretenden erhöhten Temperaturen (150 °C und mehr) in ihrer Position fixiert bleiben. Ein Ausweichen der Schleifkörner (das die Schleifwirkung reduziert) oder gar ein Ausbrechen wird so unterdrückt. Üblicherweise werden die Grundschicht in Trokkenschichtdicken von 10 bis 100 µm und die Deckschicht in Trockenschichtdicken von 20 bis $10^3$ µm aufgetragen.

Als Bindemittel für Papierstreichmassen eingesetzt, verleihen die erfindungsgemäßen wäßrigen Polymerisatdispersionen Papier eine erhöhte Naß- und Trockenrupffestigkeit.

In den nachfolgenden Beispielen wurden als verzuckerte Stärken die C* PUR Produkte 01906, 01908, 01910, 01915, 01921, 01924, 01932 oder 01934 der Cerestar Deutschland GmbH, D-1150 Krefeld 12 eingesetzt. Sie weisen im wesentlichen alle eine bimodale Molekulargewichtsverteilung auf und sind wie folgt charakterisiert:

| Typ | $M_w$ | U | Gew.-% < 1000 | DE | $\eta^{40}$ [Pa•s] |
|---|---|---|---|---|---|
| 01906 | 20080 | 10,9 | 12,2 | 2-5 | - |
| 01908 | 19290 | 10,0 | 15,9 | 8-10 | 0,056 |
| 01910 | 10540-12640 | 8,5-9,9 | 24,7-26,4 | 11-14 | 0,030 |
| 01915 | 6680-8350 | 6,8-8,4 | 32,9-34,7 | 17-19 | 0,021 |
| 01921 | 6700 | 7,4 | 39,1 | 20-23 | 0,017 |
| 01924 | 4730 | 6,8 | 53,6 | 26-30 | 0,014 |
| 01932 | 4500 | 7,9 | 63,2 | 33-35 | 0,011 |
| 01934 | 3000 | 6,0 | 68,4 | 36-39 | 0,009 |

Bestimmungen von $M_n$ mittels Dampfdruckosmose ergaben für die bevorzugten Typen 01910 und 01915 folgende Werte:
1560 g/mol (1910)
980 g/mol (1915)

Beispiele

Beispiel 1

Erfindungsgemäße wäßrige Polymerisatdispersionen DX (die Angaben in Gew.-% sind, wenn nichts anderes erwähnt ist, stets auf die Menge der polymerisierten Monomeren bezogen)

D1 bis D10: Allgemeine Herstellvorschrift

Eine Mischung bestehend aus
513 g Wasser
120 g verzuckerter Stärke (20 Gew.-%)
60 g Zulauf 1 und
39 g Zulauf 2
wurde auf 85 °C erhitzt und 15 min bei dieser Temperatur gehalten. Anschließend wurden unter Aufrechterhalten der 85 °C zeitgleich beginnend die Restmengen der Zuläufe 1 und 2 kontinuierlich (Zulauf 1 innerhalb 2,5 h, Zulauf 2 innerhalb von 3 h) der Polymerisationszone zugeführt. Abschließend wurde noch eine Stunde (85 °C) nachpolymerisiert und dann auf Raumtemperatur abgekühlt.

Zulauf 1: 330 g n-Butylacrylat (55 Gew.-%)
258 g Styrol (43 Gew.-%)
12 g Acrylsäure (2 Gew.-%)

Zulauf 2: 4,8 g Natriumperoxidisulfat in (0,8 Gew.-%) 190 g Wasser

Dieselbe wäßrige radikalische Emulsionspolymerisation wurde wiederholt, jedoch enthielt die Vorlage 300 g verzuckerte Stärke gelöst in 710 g Wasser. Es wurden wäßrige Polymerisatdispersionen erhalten, deren Gesamtfeststoffgehalt im wesentlichen 50 Gew.-% betrug und die im wesentlichen keine Ausflockungen enthielten. Von diesen Polymerisatdispersionen wurde bei 25 °C mittels eines Brookfield Viskosimeters RVT im Abstand von 3 Monaten die Brookfield Viskosität [BV (mPa•s)], jeweils bei 20 und 100 Umdrehungen pro Minute, sowie die Lichtdurchlässigkeit (LD) bestimmt. Die Daten für die Lichtdurchlässigkeit beziehen sich auf eine 0,01 gew.-%ige wäßrige Polymerisatdispersion und eine Schichtdicke von 25 mm. Gemessen wurde mit einem handelsüblichen Photometer relativ zu Wasser, dem willkürlich ein LD-Wert von 100 zugeordnet wurde. Der LD-Wert ist ein Maß für die mittlere Teilchengröße. Die erhaltenen Ergebnisse zeigt die Tabelle 1.

Tabelle 1

| | Typ u. Gew.-% der verzuckerten Stärke | BV(20) | BV(100) | BV(20) | BV(100) | LD |
|---|---|---|---|---|---|---|
| | | jeweils sofort | | nach 3 Monaten | | |
| D1 | 01915/20 | 140 | 106 | 130 | 100 | 45 |
| D2 | 01921/20 | 52 | 67 | 50 | 63 | 32 |
| D3 | 01924/20 | 40 | 57 | 40 | 56 | 29 |
| D4 | 01932/20 | 32 | 50 | 32 | 50 | 24 |
| D5 | 01934/20 | 29 | 48 | 30 | 46 | 20 |
| D6 | 01915/50 | 192 | 151 | 170 | 140 | 71 |
| D7 | 01921/50 | 54 | 83 | 60 | 80 | 58 |
| D8 | 01924/50 | 48 | 74 | 42 | 72 | 55 |
| D9 | 01932/50 | 32 | 54 | 30 | 52 | 42 |
| D10 | 01934/50 | 27 | 48 | 25 | 47 | 37 |

D11 bis D13: D11:

Ein Gemisch bestehend aus
200 g Wasser
25 g verzuckerter Stärke 01910 (5 Gew.-%)
71 g Zulauf 1 und
10 g Zulauf 2
wurde auf 85 °C erhitzt und 15 min bei dieser Temperatur gehalten. Anschließend wurden unter Aufrechterhaltung der 85 °C zeitgleich beginnend die Restmengen der Zuläufe 1 und 2 kontinuierlich (Zulauf 1 innerhalb 2,5 h, Zulauf 2 innerhalb von 3 h) der Polymerisationszone zugeführt. Dann wurde eine Stunde (85 °C) nachpolymerisiert und auf Raumtemperatur abgekühlt. Der Gesamtfeststoffgehalt der resultierenden wäßrigen Polymerisatdispersion, die im wesentlichen frei an Ausflokkungen war, betrug im wesentlichen 50 Gew.-%.

Zulauf 1: 450 g n-Butylacrylat (90 Gew.-%)
40 g Styrol (8 Gew.-%)
10 g Acrylsäure (2 Gew.-%)
voremulgiert in 204 g Wasser mittels 1,5 g (0,3 Gew.-%) des Na-Salzes der Dodecylbenzolsulfonsäure.

Zulauf 2: 2,5 g Natriumperoxidisulfat in 100 g Wasser gelöst (0,5 Gew.-%)

D12 u. D13:

Bei entsprechendem Gesamtfeststoffgehalt wie D11 wurden in entsprechender Weise die Monomerengemische

D12: 55 Gew.-% n-Butylacrylat
43 Gew.-% Styrol
2 Gew.-% Acrylsäure

sowie

D13: 50 Gew.-% n-Butylacrylat
45 Gew.-% Styrol
5 Gew.-% Acrylsäure

polymerisiert. Der Anteil der verzuckerten Stärke 01910 wurde jedoch auf 20 Gew.-% (D12) bzw. auf 40 Gew.-% (D13) bemessen und das Na-Salz der Dodecylbenzolsulfonsäure wurde in beiden Fällen mit einem Gewichtsanteil von 0,1 Gew.-% angewendet.

BV und LD-Werte der erhaltenen wäßrigen Polymerisatdispersionen, die in allen Fällen im wesentlichen keine Ausflockungen enthielten, zeigt die Tabelle 2.

Tabelle 2

| | BV(20) | BV(100) | Monate danach | BV(20) | BV(100) |
|---|---|---|---|---|---|
| | jeweils sofort | | | | |
| D11 | 63 | 69 | 8 | 50 | 63 |
| D12 | 88 | 91 | 10 | 75 | 88 |
| D13 | 132 | 122 | 3 | 124 | 117 |

D14:

Ein Gemisch, bestehend aus
394 g Wasser
300 g verzuckerter Stärke 01915 (100 Gew.-%)
40 g Zulauf 1 und
40 g Zulauf 2
wurde auf 85°C erhitzt und 15 min bei dieser Temperatur gehalten. Anschließend wurden unter Aufrechterhaltung der 85°C zeitgleich beginnend die Restmengen der Zuläufe 1 und 2 kontinuierlich (Zulauf 1 innerhalb 2,5 h, Zulauf 2 innerhalb von 3 h) der Polymerisationszone zugeführt. Dann wurde eine Stunde (85°C) nachpolymerisiert und auf Raumtemperatur abgekühlt. Der Feststoffgehalt der resultierenden Dispersion betrug 50,6 Gew.-%; Ausflockungen waren im wesentlichen nicht vorhanden.

Zulauf 1: 294 g Styrol (98 Gew.-%)
6 g Methacrylsäure (2 Gew.-%)
voremulgiert in 101 g Wasser mittels 2 g einer 15 gew.-%igen wäßrigen Lösung des Na-Salzes der Dodecylbenzolsulfonsäure (0,1 Gew.-%).

Zulauf 2: 2,4 g Natriumperoxidisulfat in 100 g Wasser gelöst (0,8 Gew.-%)

Die Bestimmung der Brookfield-Viskositäten und des LD-Wertes ergab folgende Resultate:

| BV(20) | BV(100) | BV(20) | BV(100) | LD |
|---|---|---|---|---|
| sofort | | nach 3 Monaten | | |
| 76 | 98 | 70 | 112 | 39 |

D15:

Ein Gemisch, bestehend aus
549 g Wasser
199,6 g verzuckerter Stärke 01910 (100 Gew.-%)
24 g Zulauf 1 und
30 g Zulauf 2
wurde auf 85°C erhitzt und 15 min bei dieser Temperatur gehalten. Anschließend wurden unter Aufrechterhaltung der 85°C zeitgleich beginnend die Restmengen der Zuläufe 1 und 2 kontinuierlich (Zulauf 1 innerhalb 2 h, Zulauf 2 innerhalb von 2,5 h) der Polymerisationszone zugeführt. Dann wurde eine Stunde (85°C) nachpolymerisiert und auf Raumtemperatur abgekühlt. Der Feststoffgehalt der an Ausflockungen im wesentlichen freien wäßrigen Polymerisatdispersion betrug 29,4 Gew.-%.

Zulauf 1: 196 g Styrol (98 Gew.-%)
4 g Methacrylsäure (2 Gew.-%)
voremulgiert in 271 g Wasser mittels 6,7 g einer 15 gew.-%igen wäßrigen Lösung des Na-Salzes der Dodecylbenzolsulfonsäure (0,5 Gew.-%).

Zulauf 2: 1,6 g Natriumperoxidisulfat in 100 g Wasser (0,8 Gew.-%)

Die BV-Werte wurden wie folgt bestimmt:

| BV(20) | BV(100) | BV(20) | BV(100) |
|---|---|---|---|
| sofort | | nach 3 Monaten | |
| 17 | 32 | 17 | 30 |

D16 bis D18:

D16:

Ein Gemisch, bestehend aus
203 g Wasser
6 g verzuckerter Stärke 01910 (1 Gew.-%)
81 g Zulauf 1 und
39 g Zulauf 2
wurde auf 90 °C erhitzt und 30 min bei dieser Temperatur gehalten. Anschließend wurden unter Aufrechterhaltung der 90 °C zeitgleich beginnend die Restmengen der Zuläufe 1 und 2 kontinuierlich (Zulauf 1 innerhalb von 2,5 h, Zulauf 2 innerhalb von 3 h) der Polymerisationszone zugeführt. Dann wurde eine Stunde (90 °C) nachpolymerisiert und auf Raumtemperatur abgekühlt.

Zulauf 1: 330 g n-Butylacrylat (55 Gew.-%)
258 g Styrol (43 Gew.-%)
12 g Acrylsäure (2 Gew.-%)
voremulgiert in 202 g Wasser mittels 4 g einer 15 gew.-%igen wäßrigen Lösung des Na-Salzes der Dodecylbenzolsulfonsäure (0,1 Gew.-%).

Zulauf 2: 4,8 g Natriumperoxidisulfat in 190 g Wasser (0,8 Gew.-%)

D17 und D18:

Wie D16, jedoch enthielt die Vorlage anstelle von 203 g Wasser/6 g 01910 214 g Wasser /18 g 01910 (3 Gew.-%, D17) bzw. 225 g Wasser/30 g 01910 (5 Gew.-%, D18).

BV und LD-Werte der erhaltenen wäßrigen Polymerisatdispersionen, die in allen Fällen im wesentlichen keine Ausflockungen enthielten, zeigt die Tabelle 3. Der Feststoffgehalt betrug im wesentlichen in allen Fällen 50 Gew.%.

Tabelle 3

| | BV(20) | BV(100) | BV(20) | BV(100) | LD | $\bar{d}$ [nm] |
|---|---|---|---|---|---|---|
| | sofort | | nach 11 Monaten | | | |
| D16 | 30 | 49 | 25 | 42 | 13 | 407 |
| D17 | 40 | 59 | 33 | 50 | 25 | 310 |
| D18 | 92 | 92 | 62 | 76 | 51 | 209 |
| $\bar{d}$ ist der mittlere Teilchendurchmesser und wurde mit einem Photonenkorrelationsspektrometer bestimmt (Malvern Autosizer 2C). | | | | | | |

D19:

Ein Gemisch, bestehend aus
549 g Wasser
120 g verzuckerter Stärke 01910 (20 Gew.-%)
2 g einer 15 gew.-%igen wäßrigen Lösung des Na-Salzes der Laurylsulfonsäure (0,05 Gew.-%)
60 g Zulauf 1 und
31 g Zulauf 2
wurde auf 95 °C erhitzt und 15 min bei dieser Temperatur gehalten. Anschließend wurden unter Aufrechterhaltung der 95 °C zeitgleich beginnend die Restmengen der Zuläufe 1 und 2 kontinuierlich (Zulauf 1 innerhalb von 2,5 h, Zulauf 2 innerhalb von 3 h) der Polymerisationszone zugeführt. Dann wurde eine Stunde (85 °C) nachpolymerisiert und auf Raumtemperatur abgekühlt. Es wurde eine im wesentlichen an Ausflockungen freie wäßrige Polymerisatdispersion erhalten, deren Feststoffgehalt 50 Gew.-% betrug.

Zulauf 1: 480 g Ethylacrylat (68 Gew.-%)
192 g Methylmethacrylat (32 Gew.-%)
Zulauf 2: 1,8 g Natriumperoxidisulfat in 100 g Wasser (0,3 Gew.-%)

| BV(20) | BV(100) | BV(20) | BV(100) | LD |
|---|---|---|---|---|
| sofort | | nach 4 Monaten | | |
| 64 | 86 | 53 | 78 | 58 |

D20 [D21]:

Ein Gemisch, bestehend aus
206 g [227 g] Wasser
50 g [100 g] verzuckerter Stärke 01910 (10 Gew.-% [20 Gew.-%])
16,7 g einer 30 gew.-%igen wäßrigen Wasserstoffperoxidlösung
[16,7 g einer 15 gew.-%igen wäßrigen Lösung des Na-Salzes der Laurylsulfonsäure]
47 g Zulauf 1
wurde auf 50 °C erwärmt und mit 15 g Zulauf 2 versetzt. Anschließend wurde auf 70 °C erwärmt und das Reaktionsgemisch 15 min bei dieser Temperatur gehalten. Danach wurden unter Aufrechterhaltung der 70 °C zeitgleich beginnend die Restmengen der Zuläufe 1 und 2 kontinuierlich (Zulauf 1 innerhalb von 2,5 h, Zulauf 2 innerhalb von 3 h) der Polymerisationszone zugeführt. Dann wurde 30 min (70 °C) nachpolymerisiert und auf Raumtemperatur abgekühlt.

Zulauf 1: 270 g Ethylacrylat (54 Gew.-%)
230 g Methacrylsäure (46 Gew.-%)
33,3 g [16,7 g] einer 15 gew.-%igen wäßrigen Lösung des Na-Salzes der Laurylsulfonsäure (0,1 Gew.-% [0,05 Gew.-%])
413 g Wasser
Zulauf 2: 3 g Ascorbinsäure und 0,05 g Mohrsches Salz (= $(NH_4)_2Fe(SO_4)_2 \cdot 6\ H_2O$) in 150 g Wasser.

Es wurden ca. 40 gew.-%ige wäßrige Polymerisatdispersionen erhalten, die im wesentlichen an Ausflockungen frei waren. BV-Werte und LD-Werte wurden wie folge bestimmt:

| | BV(20) | BV(100) | LD |
|---|---|---|---|
| | nach 4 Monaten | | |
| D20 | 18 | 33 | 33 |
| D21 | 27 | 48 | 61 |

D22:

Ein Gemisch aus
1443,2 g Wasser
2500 g einer 20 gew.-%igen wäßrigen Lösung der verzuckerten Stärke 01915 (25 Gew.-%)
0,06 g $FeSO_4 \cdot 7\ H_2O$
3,33 g 60 gew.-%ige wäßrige Lösung des Na-Salzes des Di-2-ethylhexylesters der Sulfobernsteinsäure (0,1 Gew.-%)
328,6 ml Zulauf 1 und
80 ml Zulauf 2
wurde auf 85 °C erhitzt und das Reaktionsgemisch 15 min bei dieser Temperatur gehalten. Danach wurden unter Aufrechterhaltung der 85 °C zeitgleich beginnend die Restmengen der Zuläufe 1 und 2 kontinuierlich

(Zulauf 1 innerhalb von 3 h, Zulauf 2 innerhalb von 4 h) der Reaktionszone zugeführt. Abschließend wurde 3 h (85 °C) nachpolymerisiert und auf Raumtemperatur abgekühlt. Es wurde eine im wesentlichen an Ausflockungen freie wäßrige Polymerisatdispersion eines Gesamtfeststoffgehaltes von 41 Gew.-% erhalten.

Zulauf 1: 2000 g Butadien (3,23 l) (100 Gew.-%)
60 g tert.-Dodecylmercaptan (3 Gew.-%)

Zulauf 2: 24 g Natriumperoxidisulfat in 376 g Wasser (1,2 Gew.-%)

BV-Werte und LD-Werte wurden wie folgt bestimmt:

| BV(20) | BV(100) | LD |
|---|---|---|
| nach 3 Monaten | | |
| 22 | 42 | 59 |

D23:

Ein Gemisch aus
247 g Wasser
90 g verzuckerter Stärke 01910 (20 Gew.-%)
63 g Zulauf 1 und
37 g Zulauf 2
wurde auf 80 °C erhitzt und 15 min bei dieser Temperatur gehalten. Danach wurden unter Aufrechterhaltung der 80 °C zeitgleich beginnend die Restmengen der Zuläufe 1 und 2 kontinuierlich (Zulauf 1 innerhalb von 2,5 h, Zulauf 2 innerhalb von 3 h) der Reaktionszone zugeführt. Abschließend wurde 1 h (80 °C) nachpolymerisiert und auf Raumtemperatur abgekühlt. Es wurde eine im wesentlichen an Ausflockungen freie wäßrige Polymerisatdispersion eines Gesamtfeststoffgehaltes von 50,2 Gew.-% erhalten, die im wesentlichen frei von Ausflockungen war.

Zulauf 1: 247,5 g n-Butylacrylat (55 Gew.-%)
193,5 g Styrol (43 Gew.-%)
9 g Acrylsäure (2 Gew.-%)
voremulgiert in 173 g Wasser mit 4,5 g einer 20 gew.-%igen wäßrigen Lösung eines Gemisches ethoxylierter Fettalkohole (EO-Grad: 18, $C_{16/18}$) (0,2 Gew.-%)

Zulauf 2: 2,25 g Natriumperoxidisulfat (0,5 Gew.-%) in 90 g Wasser

BV-Werte wurden wie folgt bestimmt:

| BV(20) | BV(100) | BV(20) | BV(100) |
|---|---|---|---|
| sofort | | nach 1 Jahr | |
| 188 | 121 | 140 | 106 |

Beispiel 2

Anwendungen von erfindungsgemäßen wäßrigen Polymerisatdispersionen

A1: Bindemittel für eine Papierstreichmasse

Eine 60 gew.-%ige Papierstreichfarbe, die, abgesehen von Wasser, wie folgt zusammengesetzt war
80 g China Clay 5PS (Kaolin)
20 g Omyalite 90 (Kreide)
0,2 g Polysalz®S (niedermolekulare Polyacrylsäure, Dispergiermittel für Kaolin und Kreide)
11,5 g erfindungsgemäße wäßrige Polymerisatdispersion D23 aus Beispiel 1 (trocken gerechnet)
0,3 g Sterocoll®D (trocken gerechnet), (wäßrige Dispersion eines acrylsäurereichen Acrylesterpolymerisats, Verdicker) und
0,6 g Blankophor® PSG-fl. (optischer Aufheller)
wurde auf Rohpapier (Scheufelenpapier) der Flächendichte 70 g/m² aufgestrichen. Die Auftragsmenge

betrug 12 g/m² (trocken). Anschließend wurde 5 min bei 120 °C getrocknet und dann bei 23 °C und 50 % rel. Luftfeuchtigkeit 8 h klimatisiert. Danach wurde das beschichtete Papier unter einem Liniendruck von 125 kp/cm in einem Walzpressenwerk satiniert, nochmals kurz klimatisiert und dann die Stricheigenschaften bestimmt. Dazu wurde mit einem handelsüblichen IGT-Gerät die Trockenrupffestigkeit TR (Angabe der krtitischen Rupfgeschwindigkeit; hohe Geschwindigkeiten entsprechen hohen Trockenrupffestigkeiten) und die Naßrupffestigkeit NR (Angabe der resultierenden Farbdichte in %; hohe Werte entsprechen hohen Naßrupffestigkeiten) bestimmt. Ferner wurde mit einem Lehmann-Prüfgerät mit Winkel 45° der Druckglanz DG bestimmt. Zum Vergleich wurde das Vorgehen mit einer Papierstreichfarbe wiederholt, bei der die 11,5 g D23 (trocken gerechnet) durch 11,5 g einer für diesen Zweck handelsüblichen mittels Emulgator stabilisierten Polymerisatdispersion (Acronal®S 320D, trocken gerechnet) ersetzt wurden. Die erhaltenen Ergebnisse zeigt Tabelle 4.

Tabelle 4

| | TR (cm/s) | NR (%) | DG (%) |
|---|---|---|---|
| D23 | 64 | 10,6 | 8,5 |
| Acronal S 320D | 46 | 30,6 | 28 |

A2: Sprühtrocknung zur Pulverherstellung

Die wäßrige Polymerisatdispersion D13 aus Beispiel 1 wurde ohne Zusatz weiterer Hilfsmittel mit einem Sprühtrockner der Fa. Niro(Typ Minor) sprühgetrocknet.
Einlaßtemperatur: 130 °C
Auslaßtemperatur: 80 °C.
Es wurde ein weißes, in voll befriedigender Weise redispergierbares Polymerisatpulver erhalten.

A3: Aluminium-Papier-Kaschierung

In 50 g wäßrige Polymerisatdispersion D13 aus Beispiel 1 wurden nach Restmonomerenbeseitigung 70 g Wasser und als Verdicker 3 g Collacral ®HP (30 gew.-%ige wäßrige Lösung eines Copolymerisats auf Basis von Acrylsäure und Acrylamid emulgiert in aliphatischer Erdölfraktion) eingerührt. 2 g/m² (trocken) dieses Kaschierklebers K1 wurden auf die matte Seite einer 0,0095 mm dicken, einseitig matten Aluminiumfolie aufgetragen. Auf das nasse Kleberbett wurde Buxinepapier (80 g/m²) aufgerollt und das so erhältliche Substrat 3 min bei 50 °C getrocknet. Anschließend wurde auf ein Format von 20 cm x 20 cm zugeschnitten und diese Zuschnitte 3 min bei 90 °C einem Druck von 100 bar ausgesetzt. Abschließend wurde der Verbund folgenden Prüfungen unterzogen:

1) Prüfung auf Haftung;

Von Hand wurde die Haftung des Buxinepapiers nach 30 minütiger Lagerung in kaltem Wasser (20 °C) und 5 minütiger Lagerung in heißem Wasser (100 °C) geprüft. Die Beurteilung erfolgte durch Noten 1 bis 5.
1 = vollflächiger Papierausriß
2 = teilweiser Papierausriß
3 = gute Haftung mit Adhäsionsbruch Folie oder Papier
4 = schwache Haftung mit Adhäsionsbruch Folie oder Papier
5 = keine Haftung.

Siegelbeständigkeit:

Die Zuschnitte wurden mit der Aluminiumseite nach oben in einem Heißsiegelgerät in 0,25 s Intervallen unter einem Druck von 2,5 bar einer von 180 °C auf 250 °C wachsenden Temperatur ausgesetzt, wobei die Steigerung der Temperatur in 10 °C Schritten erfolgte. Bei deutlich sichtbarer Blasenbildung wurde die Prüfung abgebrochen. Die Siegelbeständigkeit ist für das Aufsiegeln von Folien aus Kunststoff von Bedeutung.

Geruchsprüfung:

Zuschnitte der Fläche 9 cm x 18 cm wurden 15 s einer Temperatur von 110 °C ausgesetzt und danach in 370 ml Gläsern verschlossen und 2 h bei 50 °C gelagert. Anschließend wurden die Gläser geöffnet und auf Geruch geprüft.

1 = kein Geruch
2 = schwacher Geruch
3 = Geruch
4 = starker Geruch

Die Versuchsreihe wurde mit einem Kaschierkleber K2 wiederholt, der im Unterschied zu K1 zusätzlich 3,1 g einer 40 gew.-%igen wäßrigen Lösung von Glyoxal enthielt. Die Ergebnisse weist Tabelle 5 auf.

Tabelle 5

| | K1 | K2 |
|---|---|---|
| Haftung kalt | 1 | 1 |
| Haftung heiß | 1 | 1 |
| Siegelbeständigkeit | bis 210 °C | bis 240 °C |
| Geruch | 2 | 2 |

A4: Schleifartikel auf der Basis von auf einem Träger mit einer erfindungsgemäßen wäßrigen Polymerisatdispersion gebundenen feinteiligen Schleifpartikeln

100 g verschiedener erfindungsgemäßer wäßriger Polymerisatdispersionen aus Beispiel 1, denen teilweise pro Gewichtsteil enthaltener verzuckerter Stärke 0,062 Gewichtsteile Glyoxal zugesetzt wurden, wurden mit 1 g Lumiten ® (Benetzungsmittel) vermischt und mit einer Auftragsmasse von 20 $g/m^2$ (trocken) auf ein Trägerpapier aufgetragen. In die nasse Auftragsschicht wurde Halbedelkorund 60 eingestreut und das so beschichtete Papier 3 min bei 90 °C getrocknet. Anschließend wurde dasselbe Bindemittel mit einer Auftragsmasse von 60 $g/m^2$ (trocken) als Deckbinder aufgebracht und ebenfalls getrocknet (30 min). Das so erhältliche Schleifpapier wurde mittels eines Abriebgerätes APG 100/20 (Fa. Maag & Schank, Gomaringen) geprüft. Als Prüfkörper wurden Körper der Abmessungen 40 mm x 20 mm x 5 mm aus Hart-PVC verwendet. Dabei wurde mit 500 Hüben (Belastung 1 kg) die Fläche von 20 mm x 5 mm abgeschliffen, wobei das Schleifpapier unter dem Prüfkörper auf einer Länge von 10,5 cm hin- und herbewegt wurde. Als Maß für die Qualität des Bindemittels dient der Abrieb, der wie folgt definiert ist:

$$\text{Abrieb [\%]} = \frac{\text{Masse Prüfkörper vor Prüfung} - \text{Masse Prüfkörper nach Prüfung}}{\text{Masse Prüfkörper vor Prüfung}} \times 100$$

Die Ergebnisse zeigt Tabelle 6.

Tabelle 6

| Bindemittel | Glyoxal | Trockentemperatur (°C) Deckschicht | Abrieb [%] |
|---|---|---|---|
| D13 | - | 90 | 8,7 |
| D13 | + | 90 | 10,7 |
| D24* | + | 150 | 7 |
| D25* | + | 150 | 7,5 |

* D24 und D25 hergestellt wie D13, aber mit unterschiedlicher Monomerenzusammensetzung;
D24: 50 Gew.-% n-Butylacrylat,
45 Gew.-% Styrol,
5 Gew.-% Methacrylsäure;
D25: 50 Gew.-% n-Butylacrylat,
40 Gew.-% Styrol,
10 Gew.-% Acrylsäure;

A5: Gießereiformkörper mit erfindungsgemäßen Bindemitteln

1000 g Quarzsand H 33 wurden mit verschiedenen Mengen (in Tabelle 7 angegeben in Gew.-% bezogen auf Sand, trocken gerechnet) erfindungsgemäßer wäßriger Polymerisatdispersionen eines Gesamtfeststoffgehalts von 50 Gew.-%, denen teilweise pro Gewichtsteil enthaltener verzuckerter Stärke 0,125 Gew.-Teile Glyoxal oder 1,075 Gew.-Teile Urecoll 118 zugesetzt wurden, vermischt. Anschließend wurde das Gemisch in eine Form gegeben und mittels einer Ramme (G. Fischer AG, Schaffhausen, Schweiz) mit einem Gewicht der Masse 6,7 kg bei einer Fallhöhe von 5 cm drei Mal verdichtet. Die so erhaltenen Formkörper (Fischer-Riegel) hatten bei abgerundeten Enden folgende Dimensionen:

Länge ca. 173 mm
Breite ca. 22 mm
Höhe ca. 22 mm

Danach wurden die Riegel unter verschiedenen Bedingungen getrocknet und anschließend die Kernbiegefestigkeit bei Raumtemperatur mit einem G. Fischer AG (Schaffhausen, Schweiz) Prüfgerät bestimmt.

Die Herstellung der verwendeten erfindungsgemäßen wäßrigen Polymerisatdispersionen entsprach D12 aus Beispiel 1, jedoch mit teilweise davon verschiedener Monomerenzusammensetzung sowie, bezogen auf die Monomeren, anderen Mengen verzuckerter Stärke. Detaillierte Angaben und die Ergebnisse zeigt Tabelle 7.

Dabei wurden für die Monomeren nachfolgende Abkürzungen verwendet:

BA = n-Butylacrylat
St = Styrol
AS = Acrylsäure
MAmol = N-Methylolmethacrylamid
BDA = Butandioldiacrylat
DVB = Divinylbenzol

Tabelle 7

| Monomerenzusammensetzung (Gew.-%) | Gew.-% Stärke | Menge Bindemittel | Glyoxal | Urecoll | Trocknungsdauer | Temperatur (°C) | Kernbiegefestigkeit ($N/mm^2$) |
|---|---|---|---|---|---|---|---|
| 55 BA 43 St 2 AS | 40 | 1 | - | - | 10 min | 150 | 1,8 |
| 55 BA 43 St 2 AS | 40 | 2 | - | - | 10 min | 150 | 4,9 |
| 55 BA 43 St 2 AS | 40 | 3 | - | - | 10 min | 150 | 6,0 |
| 55 BA 43 St 2 AS | 40 | 3 | - | - | 30 min | 150 | 5,8 |
| 55 BA 43 St 2 AS | 40 | 3 | + | - | 30 min | 150 | 6,2 |
| 55 BA 43 St 2 AS | 50 | 2 | - | - | 10 min | 150 | 4,9 |
| 45 BA 53 St 2 AS | 40 | 2 | - | - | 10 min | 150 | 6,2 |
| 65 BA 33 St 2 AS | 40 | 2 | - | - | 10 min | 150 | 3,8 |
| 52 BA 41 St 2 AS 5 MAmol | 50 | 2 | - | - | 10 min | 150 | 4,5 |
| 55 BA 42,5 St 2 AS 0,5 BDA | 50 | 2 | - | - | 10 min | 150 | 5,2 |
| 54 BA 42 St 2 AS 2 DVB | 50 | 2 | - | - | 10 min | 150 | 5,0 |
| 50 BA 45 St 5 AS | 40 | 2 | - | - | 10 min | 150 | 5,2 |
| 50 BA 45 St 5 AS | 40 | 2 | - | + | 10 min | 150 | 7,9 |
| 45 BA 53 St 2 AS | 40 | 2 | - | + | 10 min | 150 | 8,7 |
| 45 BA 53 St 2 AS | 40 | 2 | - | + | 10 min | 150 | 2,6 (bei 200°C) |

Tabelle 7 (Fortsetzung)

| Monomerenzusammensetzung (Gew.-%) | Gew.-% Stärke | Menge Bindemittel | Glyoxal | Urecoll | Trocknungsdauer | Temperatur (°C) | Kernbiegefestigkeit ($N/mm^2$) |
|---|---|---|---|---|---|---|---|
| 55 BA 42,5 St 2 AS 0,5 DVB | 50 | 2 | - | - | 3 min | Mikrowelle 1300W | 5,0 |
| 50 BA 45 St 5 AS | 40 | 2 | - | - | 4 h | 25 | 2,5 |
| 50 BA 45 St 5 AS | 40 | 2 | - | - | 6 h | 25 | 5,1 |

## Patentansprüche

1. Wäßrige Polymerisatdispersionen von durch radikalische Polymerisation ungesättigter Monomeren erhältlichen Polymerisaten, die wenigstens ein durch Hydrolyse in wäßriger Phase erhältliches Stärkeabbauprodukt zugesetzt enthalten, das bei Raumtemperatur in Wasser vollständig löslich ist und ein

gewichtsmittleres Molekulargewicht $M_w$ von 2500 bis 25000 aufweist.

**2.** Wäßrige Polymerisatdispersionen nach Anspruch 1, die wenigstens ein durch Hydrolyse in wäßriger Phase erhältliches Stärkeabbauprodukt zugesetzt enthalten, das bei 25 °C eine wenigstens 40 gew.-%ige wäßrige Lösung zu bilden vermag, bei einem Schergefälle von $75s^{-1}$ eine nach DIN 53019 bestimmte dynamische Viskosität $\eta^{40}$ [Pa•s] von 0,01 bei 0,06 und ein gewichtsmittleres Molekulargewicht $M_w$ von 2500 bis 25000 aufweist.

**3.** Wäßrige Polymerisatdispersionen nach Anspruch 1, die wenigstens ein durch Hydrolyse in wäßriger Phase erhältliches Stärkeabbauprodukt zugesetzt enthalten, das bei Raumtemperatur in Wasser eine Löslichkeit von > 50 Gew.-% und ein gewichtsmittleres Molekulargewicht $M_w$ von 2500 bis 25000 aufweist.

**4.** Wäßrige Polymerisatdispersionen nach den Ansprüchen 1 bis 3, dadurch erhältlich, daß die radikalische Polymerisation der ungesättigten Monomeren in Anwesenheit des durch Hydrolyse in wäßriger Phase erhältlichen Stärkeabbauprodukts mit einem gewichtsmittleren Molekulargewicht $M_w$ von 2500 bis 25000 und nach der Methode der radikalischen wäßrigen Emulsionspolymerisation erfolgt.

**5.** Polymerisatdispersionen nach den Ansprüchen 1 bis 4, deren Stärkeabbauprodukt eine Molekulargewichtsverteilung aufweist, deren Uneinheitlichkeit U im Bereich von 6 bis 12 liegt.

**6.** Polymerisatdispersionen nach den Ansprüchen 1 bis 5, deren Stärkeabbauprodukt chemisch modifiziert ist.

**7.** Verfahren zur Herstellung wäßriger Polymerisatdispersionen gemäß den Ansprüchen 1 bis 6, dadurch gekennzeichnet, daß man die radikalisch zu polymerisierenden Monomeren in Anwesenheit des Stärkeabbauproduktes nach der Methode der radikalischen wäßrigen Emulsionspolymerisation polymerisiert.

**8.** Verwendung der wäßrigen Polymerisatdispersionen gemäß den Ansprüchen 1 bis 6 als Bindemittel, Klebstoff, Schlichtemittel für Fasern oder zur Herstellung von Überzügen.

**9.** Formkörper auf der Basis feinteiliger organischer und/oder anorganischer Materialien, der als Bindemittel eine Polymerisatdispersion gemäß den Ansprüchen 1 bis 6 enthält.

**10.** Schleifartikel auf der Basis feinteiliger Schleifpartikel, der als Bindemittel eine Polymerisatdispersion gemäß den Ansprüchen 1 bis 6 enthält.

**11.** Verfahren zur Herstellung von Formkörpern auf der Basis feinteiliger organischer und/oder anorganischer Materialien oder von Schleifartikeln auf der Basis feinteiliger Schleifpartikel durch Binden der feinteiligen Materialien mit einem Bindemittel gemäß den Ansprüchen 1 bis 6, dadurch gekennzeichnet, daß die Härtung unter Einwirkung von Mikrowellenstrahlung erfolgt.

**12.** Polymerisatpulver, erhältlich durch Trocknen von wäßrigen Polymerisatdispersionen gemäß den Ansprüchen 1 bis 6 und mineralische Bindemittel, enthaltend solche Polymerisatpulver.

**Claims**

**1.** An aqueous polymer dispersion of polymers obtainable by free-radical polymerization of unsaturated monomers, which contains at least one added starch-degradation product which is obtainable by hydrolysis in the aqueous phase, is completely soluble in water at room temperature and has a weight average molecular weight $M_w$ of from 2500 to 25000.

**2.** An aqueous polymer dispersion as claimed in claim 1, which contains at least one added starch-degradation product which is obtainable by hydrolysis in the aqueous phase, can form an at least 40% strength by weight aqueous solution at 25 °C and has a dynamic viscosity $\eta^{40}$ [Pa•s], determined in accordance with DIN 53019 at a shear gradient of $75s^{-1}$, of from 0.01 to 0.06 and a weight average molecular weight $M_w$ of from 2500 to 25000.

3. An aqueous polymer dispersion as claimed in claim 1, which contains at least one added starch-degradation product which is obtainable by hydrolysis in the aqueous phase and has a solubility in water of > 50% by weight at room temperature and a weight average molecular weight $M_w$ of from 2500 to 25000.

4. An aqueous polymer dispersion as claimed in any of claims 1 to 3, obtainable by carrying out the free-radical polymerization of the unsaturated monomers in the presence of a starch-degradation product having a weight average molecular weight $M_w$ of from 2500 to 25000 which is obtainable by hydrolysis in the aqueous phase, and by the method of free-radical aqueous emulsion polymerization.

5. A polymer dispersion as claimed in any of claims 1 to 4, wherein the starch-degradation product has a molecular weight distribution whose nonuniformity U is in the range from 6 to 12.

6. A polymer dispersion as claimed in any of claims 1 to 5, wherein the starch-degradation product has been chemically modified.

7. A process for the preparation of an aqueous polymer dispersion as claimed in any of claims 1 to 6, which comprises polymerizing the monomers to be free-radical-polymerized, in the presence of a starch-degradation product by the free-radical aqueous emulsion polymerization method.

8. The use of an aqueous polymer dispersion as claimed in any of claims 1 to 6 as a binder, adhesive, fiber size or for the production of coatings.

9. A molding based on finely divided organic and/or inorganic materials containing, as binder, a polymer dispersion as claimed in any of claims 1 to 6.

10. An abrasive article based on finely divided abrasive particles containing, as binder, a polymer dispersion as claimed in any of claims 1 to 6.

11. A process for the production of moldings based on finely divided organic and/or inorganic materials or of abrasive articles based on finely divided abrasive particles by binding the finely divided materials by means of a binder as claimed in any of claims 1 to 6, which comprises carrying out the curing by means of microwave radiation.

12. A polymer powder obtainable by drying an aqueous polymer dispersion as claimed in any of claims 1 to 6, and a mineral binder containing such a polymer powder.

**Revendications**

1. Dispersions aqueuses de polymères susceptibles d'être obtenus par polymérisation radicalaire de monomères insaturés, auxquelles est ajouté au moins un produit de dégradation d'amidon qui peut être obtenu par hydrolyse en phase aqueuse, est complètement soluble dans l'eau à la température ambiante et présente un poids moléculaire (moyenne en poids) $M_w$ de 2500 à 25 000.

2. Dispersions aqueuses de polymères selon la revendication 1, auxquelles est ajouté au moins un produit de dégradation d'amidon qui peut être obtenu par hydrolyse en phase aqueuse, est capable de former à 25 °C une solution aqueuse à 40% en poids au moins et présente, avec un gradient de cisaillement de 75 $s^{-1}$, une viscosité dynamique $\eta^{40}$ (Pa.s), déterminée suivant la norme DIN 53 019, de 0,01 à 0,06 et un poids moléculaire (moyenne en poids) $M_w$ de 2500 à 25 000.

3. Dispersions aqueuses de polymères selon la revendication 1, auxquelles est ajouté au moins un produit de dégradation d'amidon qui peut être obtenu par hydrolyse en phase aqueuse et présente une solubilité dans l'eau supérieure à 50% en poids a la température ambiante et un poids moléculaire (moyenne en poids) $M_w$ de 2500 à 25 000.

4. Dispersions aqueuses de polymères selon l'une quelconque des revendications 1 à 3, susceptibles d'être obtenues par le fait que la polymérisation radicalaire des monomères insaturés est effectuée en présence du produit de dégradation d'amidon pouvant être obtenu par hydrolyse en phase aqueuse et

ayant un poids moléculaire (moyenne en poids) $M_w$ de 2500 à 25 000, et par le procédé de la polymérisation radicalaire en émulsion aqueuse.

**5.** Dispersions de polymères selon l'une quelconque des revendications 1 à 4, dont le produit de dégradation d'amidon présente une distribution du poids moléculaire dont l'hétérogénéité U se situe dans la gamme de 6 à 12.

**6.** Dispersions de polymères selon l'une quelconque des revendications 1 à 5, dont le produit de dégradation d'amidon est modifié chimiquement.

**7.** Procédé de préparation de dispersions aqueuses de polymères selon l'une quelconque des revendications 1 à 6, caractérisé en ce que l'on polymérise les monomères susceptibles de polymérisation radicalaire en présence du produit de dégradation d'amidon, par le procédé de la polymérisation radicalaire en émulsion aqueuse.

**8.** Utilisation des dispersions aqueuses de polymères selon l'une quelconque des revendications 1 à 6 comme liants, colles ou agents d'encollage pour fibres ou pour la formation de revêtements.

**9.** Corps moulé à base de matières organiques et/ou inorganiques finement divisées, contenant en tant que liant une dispersion de polymère selon l'une quelconque des revendications 1 à 6.

**10.** Article de ponçage à base de particules abrasives finement divisées, contenant en tant que liant une dispersion de polymère selon l'une quelconque des revendications 1 à 6.

**11.** Procédé de fabrication de corps moulés à base de matières organiques et/ou inorganiques finement divisées ou d'articles de ponçage à base de particules abrasives finement divisées, par liaison des matières finement divisées avec un liant selon l'une quelconque des revendications 1 à 6, caractérisé en ce que le durcissement est effectue sous l'action d'un rayonnement de micro-ondes.

**12.** Poudre de polymère, susceptible d'être obtenue par séchage de dispersions aqueuses de polymères selon l'une quelconque des revendications 1 à 6, et liants minéraux contenant une telle poudre de polymère.